# EUROPÄISCHE PATENTANMELDUNG

(11) **EP 2 518 421 A2**
(43) Veröffentlichungstag der Anmeldung: **31.10.2012**
(21) Anmeldenummer: 12155690.6
(22) Anmeldetag: 16.02.2012
(51) Int. Cl.: F24J 2/52

(54) **Solaranordnung**

(30) Priorität: 26.04.2011 DE 102011017518
(71) Anmelder: HILTI Aktiengesellschaft, 9494 Schaan (LI)
(72) Erfinder: Mundwiler, Lukas, 4434 Hoelstein (CH); Bragagna, Elio, 6822 Düns (AT)

(57) **Zusammenfassung**

Die Erfindung betrifft eine selbsttragende Solaranordnung mit einer Vielzahl von Solarmodulen (10) und einer Unterkonstruktion (61), welche die Solarmodule (10) trägt und miteinander verbindet, wobei die Unterkonstruktion (61) eine Vielzahl von Modulpositionen (1,2) definiert, an denen jeweils ein Solarmodul (10) angeordnet ist, wobei in der Unterkonstruktion (61) als S-Modulpositionen (1) ausgebildete Modulpositionen vorgesehen sind, die jeweils ein Windschott (20) aufweisen, welches eine Durchgangsöffnung (29) zur Unterseite des an der jeweiligen S-Modulposition (1) angeordneten Solarmoduls (10) abdeckt. Nach der Erfindung ist vorgesehen, dass in der Unterkonstruktion (61) zusätzlich zu den S-Modulpositionen (1) auch als F-Modulpositionen (2) ausgebildete Modulpositionen vorgesehen sind, bei denen jeweils zumindest ein Teil der Durchgangsöffnung (29), die bei einer S-Modulposition (1) vom Windschott (20) abgedeckt ist, frei ist.

## Beschreibung

Die Erfindung betrifft eine selbsttragende Solaranordnung gemäss dem Oberbegriff des Anspruchs 1. Eine solche Solaranordnung ist ausgestattet mit einer Vielzahl von Solarmodulen und einer Unterkonstruktion, welche die Solarmodule trägt und miteinander verbindet, wobei die Unterkonstruktion eine Vielzahl von Modulpositionen definiert, an denen jeweils ein Solarmodul angeordnet ist, wobei in der Unterkonstruktion als S-Modulpositionen ausgebildete Modulpositionen vorgesehen sind, die jeweils ein Windschott aufweisen, welches eine Durchgangsöffnung zur Unterseite des an der jeweiligen S-Modulposition angeordneten Solarmoduls abdeckt.

Es sind, beispielsweise aus der US 2009242014 A, selbsttragende Befestigungsstrukturen für Solarmodule bekannt, die es erlauben, Solarmodule unter einem Winkel zur Horizontalen und in Reihen auf Flachdächern zu installieren, ohne eine direkte Befestigung bzw. Verbindung zum Gebäude herzustellen. Die Absicherung der Befestigungsstruktur gegen Verschieben oder Abheben erfolgt über Ballast.

Da die Traglastfähigkeit der Dächer in den meisten Fällen limitiert ist, kann es erforderlich sein, Massnahmen zur Ballastreduktion vorzusehen. Beispielsweise ist es aus der US 2009242014 A und der WO 07/079382 A2 bekannt, den Solarmodulen jeweils ein Windschott in Form eines Blechteils zuzuordnen, welches an der Nordseite des geneigten Moduls, also an der Kante, an der das geneigte Modul am weitesten von der Dachoberfläche entfernt ist, angeordnet wird. Diese Massnahme berücksichtigt, dass auf ein aufgeständertes geneigtes Modul in der Regel dann die höchsten Windkräfte wirken, wenn der Wnd von Norden auf die Struktur trifft und somit gegen die Unterseite des geneigten Moduls wirkt. Ein Windschott in Form eines Blechteils, das an der Nordseite des Moduls angebracht ist, kann den Wnd um das Modul herumleiten, und kann dabei maßgeblich die abhebende Kraft reduzieren. Unter Umständen kann damit sogar ganz auf Ballast verzichtet werden.

Aufgabe der Erfindung ist es, eine besonders kostengünstige und leichte selbsttragende Solaranordnung anzugeben, die gleichzeitig besonders einfach zu montieren ist.

Die Aufgabe wird erfindungsgemäss durch eine Solaranordnung mit den Merkmalen des Anspruchs 1 gelöst. Bevorzugte Ausführungsformen sind in den abhängigen Ansprüchen angegeben.

Eine erfindungsgemässe Solaranordnung ist dadurch gekennzeichnet, dass in der Unterkonstruktion zusätzlich zu den S-Modulpositionen auch als F-Modulpositionen ausgebildete Modulpositionen vorgesehen sind, bei denen jeweils zumindest ein Teil der Durchgangsöffnung, die bei einer S-Modulposition vom Windschott abgedeckt ist, frei ist. Demgemäss definiert die Unterkonstruktion nach der Erfindung sowohl S-Modulpositionen als auch F-Modulpositionen. Insbesondere kann vorgesehen sein, dass sämtliche Modulpositionen entweder S-Modulpositionen oder F-Modulpositionen sind, dass also kein anderer Modulpositionstyp vorhanden ist. Bei den F-Modulpositionen ist zumindest ein Teil der Durchgangsöffnung, die bei einer S-Modulposition vom Windschott abgedeckt ist, frei, d.h. unbedeckt, so dass ein Atmosphärendurchgang möglich ist. Insbesondere kann bei F-Modulpositionen das Windschott komplett fehlen.

Die Erfindung basiert auf der in intensiven Windkanaluntersuchungen gewonnenen Erkenntnis, dass der Wind häufig nicht an allen Stellen der Solaranordnung mit derselben Intensität wirkt. Vielmehr gibt es in der Solaranordnung häufig exponiertere Stellen, an denen die Windlasten im Mittel grösser sind, und weniger exponierte Stellen, an denen die Windlasten im Mittel kleiner sind. Beispielsweise wurde beobachtet, dass an den Randzonen einer Solaranordnung häufig höhere Kräfte als im Inneren der Solaranordnung wirken. Dieser Beobachtung, die als "Verschattungseffekt" bezeichnet werden kann, liegt zugrunde, dass der Wind im Randbereich der Anordnung mit voller Wucht auf die Module trifft, wohingegen die Module, die hinter den Randmodulen platziert sind, in einer Art Windschatten der Randmodule liegen, so dass auf diese Module im Mittel geringere abhebende Kräfte wirken.

Weiter basiert die Erfindung auf der Erkenntnis, dass eine starre Unterkonstruktion in der Lage ist, lokal an einzelnen Modulen auftretende Windlasten über die gesamte Solaranordnung zu verteilen. Sind somit bestimmte Modulpositionen mit einem Windschott versehen, welches beim Auftreten von Windlasten Abtriebskräfte generiert, so können diese Abtriebskräfte über eine starre Unterkonstruktion auch an benachbarte Modulpositionen weitergeleitet werden und an diesen benachbarten Modulpositionen für einen Abtrieb sorgen, selbst wenn dort keine Windschotts vorhanden sein sollten.

Aufbauend auf diesen Erkenntnissen sieht die Erfindung nun vor, lediglich einen Teil der Modulpositionen, die sogenannten S-Modulpositionen, mit einem Windschott zu versehen, und die verbleibenden Modulpositionen, die sogenannten F-Modulpositionen, gezielt und zumindest teilweise, insbesondere vollständig, windschottfrei auszugestalten. Insbesondere können nach der Erfindung die Windschotts gezielt dort angeordnet werden, wo der Wind im Mittel relativ grosse abhebende Kräfte verursacht und/oder wo die Windschotts beim Auftreten von Wind im Mittel relativ grosse Abtriebskräfte bewirken. Die verbleibenden, insbesondere die verschatteten Modulpositionen, an denen der Wind im Mittel nur eine geringe Wirkung entfaltet, können nach der Erfindung hingegen windschottfrei als F-Modulpositionen ausgestaltet werden. Da somit erfindungsgemäss bei einem Teil der Modulpositionen das Windschott zumindest teilweise fehlt, werden verglichen mit einer Anordnung aus dem Stand der Technik, die komplett mit Windschotts ausgestattet ist, erfindungsgemäss besonders günstige Kosten und ein besonders niedriges Gewicht erhalten, was im Hinblick auf die Traglastfähigkeit der Dächer vorteilhaft ist. Auch kann bei den windschottfreien F-Modulpositionen eine besonders gute Belüftung und somit Kühlung der entsprechenden Module gegeben sein, so dass besonders hohe Wirkungsgrade erhalten werden können.

Bei den Solarmodulen kann es sich insbesondere um Photovoltaikmodule handeln. Grundsätzlich können die Solarmodule aber auch solarthermische Solarmodule sein.

Vorteilhafterweise weist die Unterkonstruktion eine Vielzahl von Füssen auf, die jeweils vier benachbarte Solarmodule tragen und/oder miteinander verbinden. Hierdurch kann eine besonders kostengünstige Unterkonstruktion erhalten werden, die zugleich besonders steif ist, so dass eine besonders gute Kraftübertragung zwischen den F-Modulpositionen und den S-Modulpositionen gegeben ist. Insbesondere kann vorgesehen sein, dass die Unterkonstruktion eine Vielzahl von Füssen aufweist, wobei jeder der Füsse vier Modulecken aufnimmt, wobei die vier Modulecken vier unterschiedlichen Solarmodulen gehören. Die Solarmodule sind an den Füssen zweckmässigerweise festgeklemmt, wofür geeignete Modulklemmen vorgesehen werden können. In den Randbereichen der erfindungsgemässen Solaranordnung können auch anders gestaltete Randfüsse vorgesehen sein, beispielsweise Füsse, die nur zwei Solarmodule oder nur ein Solarmodul tragen.

Gemäss einer weiteren vorteilhaften Ausführungsvariante ist vorgesehen, dass die die Füsse Gussteile sind. Insbesondere können die Füsse Metallgussteile, beispielsweise Aluminiumgussteile, vorzugsweise Aluminium-Druckgussteile sein. Durch Verwendung eines Gussmaterials wird eine besonders hohe Steifigkeit in der Unterstruktur erhalten, was für eine besonders gute Verteilung der Windlasten sorgen kann und somit potenziell besonders viele Windschotts überflüssig machen kann. Der Vorteil dieser Ausführungsvariante wird insbesondere deutlich gegenüber einem Vergleichkonzept mit Füssen, die aus relativ flexiblen gebogenen Blechteilen bestehen, wobei die Wndschotts genutzt werden, um die nötige Stabilität der Struktur zu erreichen. Zwar können bei diesem Vergleichskonzept Kosten an der Unterkonstruktion eingespart werden. Jedoch müssen bei diesem Vergleichskonzept die Windschotts an allen Modulpositionen montiert werden, um die nötige Stabilität sicherzustellen. Die Windschotts haben hier sowohl aerodynamische Funktion als auch statische Funktion im Sinne einer Aussteifung. Die Gesamtkosten dieses Vergleichskonzepts werden hauptsächlich von den Windschotts verursacht, und sind im Verhältnis zu Lösungen ohne Windschotts relativ hoch. Im Gegensatz zu dieser Lösung ist erfindungsgemäss eine Entkoppelung der statischen und aerodynamischen Funktion gegeben, bei der Schnee- und Windlasten von der Unterkonstruktion auch ohne Windschotts aufgenommen werden können. Diese Entkoppelung der statischen und aerodynamischen Funktion eröffnet die Möglichkeit, nur in Teilbereichen der Anordnung Windschotts einzusetzen und somit die Gesamtkosten zu reduzieren.

Insbesondere um eine weitere Aussteifung und somit eine noch bessere Verteilung von Windlasten zu erzielen, ist es vorteilhaft, dass in zumindest einem Teil der Unterkonstruktion benachbarte Füsse mit Streben verbunden sind. Zweckmässigerweise ist eine Verbindung benachbarter Füsse mit Streben in zumindest einer Raumrichtung, insbesondere in zwei Raumrichtungen gegeben.

Der oben beschriebene Verschattungseffekt und somit die vorteilhafte Wrkung der Erfindung wird sich in der Regel umso deutlicher bemerkbar machen, je mehr Modulpositionen die Solaranordnung aufweist. Demgemäss kann die Erfindung insbesondere bei grossen Solaranordnungen zum Einsatz kommen. Besonders vorteilhaft ist es daher, dass zumindest 25 Modulpositionen, zumindest 50 Modulpositionen oder zumindest 100 Modulpositionen vorgesehen sind.

Eine besonders gute Gewichtsersparnis kann dadurch erhalten werden, dass mehr als 25%, mehr als 50% oder mehr als 75 % der Modulpositionen F-Modulpositionen sind. Vorzugsweise sind mindestens 10%, mindestens 20 % oder mindestens 30% der Modulpositionen S-Modulpositionen, das heisst Modulpositionen mit Windschott.

Weiterhin ist es besonders bevorzugt, dass zumindest ein Teil der Modulpositionen bei Draufsicht auf die Solaranordnung in Form einer rechteckigen Matrix angeordnet ist. Hierdurch kann die Montage weiter erleichtert werden. Da sich wie schon zuvor erläutert die vorteilhafte Wirkung der Erfindung in der Regel umso deutlicher bemerkbar machen wird, je mehr Modulpositionen die Solaranordnung aufweist, weist die Matrix zweckmässigerweise zumindest 5 Reihen und zumindest 5 Spalten auf.

Eine weitere vorteilhafte Ausführungsform der Erfindung liegt darin, dass bei Draufsicht auf die Solaranordnung genau ein zusammenhängender F-Bereich aus F-Modulpositionen gebildet ist, wobei der zusammenhängende F-Bereich zumindest 70%, zumindest 80% oder zumindest 90% aller F-Modulpositionen der Solaranordnung, d.h. im wesentlichen alle F-Modulpositionen der Solaranordnung enthält. Diese Ausführungsform berücksichtigt, dass der Verschattungseffekt eine vergleichsweise grosse Reichweite hat. Dies ermöglicht es, die F-Modulpositionen auf der Solaranordnung in einem Bereich zu konzentrieren, was wiederum die Montage erleichtert, da eine solche Konzentration auf einen Bereich besonders einfache Montagemuster ermöglicht.

Überdies ist es zweckmässig, dass zumindest 50%, zumindest 60% oder zumindest 70 % der bei Draufsicht auf die Solaranordnung am Rand der Solaranordnung liegenden Randmodulpositionen S-Modulpositionen sind. Diese Ausführungsform berücksichtigt, dass sich der oben genannte Verschattungseffekt nur an innen liegenden Modulpositionen bemerkbar macht, wohingegen die Randmodulpositionen dem Wind häufig ungeschützt ausgesetzt sind. Daher sieht die Ausführungsform vor, einen wesentlichen Teil der Randpositionen mit Windschotts auszugestalten, so dass einerseits eine besonders hohe Windsicherheit und andererseits auch ein besonders ausgeprägter Verschattungseffekt erhalten wird.

Eine weitere vorteilhafte Weiterbildung der Erfindung liegt darin, dass zumindest 70%, zumindest 80% oder zumindest 90% der S-Modulpositionen, also im Wesentlichen alle S-Modulpositionen, bei Draufsicht auf die Solaranordnung in einer U-Form angeordnet sind. Diese Ausführungsform berücksichtigt einerseits, dass Solaranordnungen, insbesondere wenn die Module geneigt sind, in der Regel keine isotrope Struktur aufweisen und somit auf Windeinfall aus unterschiedlichen Richtungen unterschiedlich reagieren, und kann darüber hinaus berücksichtigem, dass es am Montageort häufig bevorzugte Wetterlagen und damit bevorzugte Windrichtungen gibt. Durch Anordnung der mit Windschotts versehenen Modulpositionen in einer U-Form ist es möglich, gezielt die windanfälligeren Ränder der Solarmodulanordnung zu schützen, so dass bei besonders geringem Gewicht besonders gute Eigenschaften bei Wind erhalten werden.

Erfindungsgemäss kann die Solaranordnung eine Nordseite, eine Südseite, eine Westseite und eine Ostseite aufweisen. Entsprechend der in der Solartechnik üblichen Konvention beziehen sich diese Richtungsangaben nicht primär auf die Ausrichtung der Solaranordnung relativ zu den Erdpolen, sondern auf die Neigung der Solarmodule relativ zur Horizontalen. Demgemäss ist die Südseite die Seite, zu der die photoaktiven Oberseiten der Solarmodule hin geneigt sind, und die weiteren Seiten sind entsprechend einer Kompassrose angeordnet. Auf der Nordhalbkugel der Erde wird eine solche Solaranordnung in der Regel dann den grössten Wirkungsgrad haben, wenn die Südseite der Solaranordnung nach geographisch Süd ausgerichtet ist.

Die im Rahmen der Erfindung durchgeführten aerodynamischen Untersuchungen von Solaranordnungen auf Dächern haben gezeigt, dass Windschotts an den Ost-, Nord- und West-Seiten der PV-Installation häufig am effizientesten arbeiten. Demgemäss ist es vorteilhaft, dass die beiden Seitenschenkel der oben genannten U-Form der S-Modulpositionen in Nord-Süd-Richtung verlaufen und der Mittelschenkel in Ost-West-Richtung.

Ferner wurde im Rahmen der Untersuchungen festgestellt, dass die Restlasttragfähigkeit des Daches einen Einfluss auf die Windschottanordnung haben kann. Um eine bestmögliche Balance zwischen Mehrkosten und aerodynamischer Effizienz zu erreichen, kann die Windschottanordnung an die Restlasttragfähigkeit angepasst werden. Dadurch variiert die vorteilhafte Anzahl von S-Modulreihen an der Nordseite und die vorteilhafte Anzahl der S-Modulspalten an der Ost- und Westseite der Solaranordnung. Vorteilhafterweise sind ausgehend von der Nordseite 1 bis 6 Modulreihen und/oder ausgehend von der Ostseite und der Westseite jeweils 1 bis 6 Spalten der Matrix als S-Modulpositionen mit Wndschotts ausgebildet.

Eine weitere bevorzugte Ausführungsform besteht darin, dass an zumindest einer Ecke der Matrix ein Eckenschutzbereich gebildet ist, in dem die Flächendichte der S-Modulpositionen gegenüber der Umgebung des Eckenschutzbereichs erhöht ist. Insbesondere kann ein solcher Eckenschutzbereich an der nordwestlichen Ecke und/oder der nordöstlichen Ecke vorgesehen sein. Diese Ausführungsform berücksichtigt, dass Turbulenzen in den Eckbereichen weiter in die Mitte der Solaranordnung wirken können als an den Seiten. Daher werden gemäss der bevorzugten Ausführungsform im Bereich dieser Ecken Eckenschutzbereiche gebildet, in denen verglichen mit Umgebung der Eckenschutzbereiche vergleichsweise viele Windschotts vorhanden sind, so dass die Flächendichte der Windschotts, also die Flächendichte der S-Modulpositionen, dort zumindest lokal erhöht ist. Solche Eckenschutzbereiche sind insbesondere dann vorteilhaft, wenn nur relativ wenig Reihen und/oder Spalten mit Windschotts ausgerüstet werden.

Vorteilhafterweise kommt die Erfindung bei einer gebrauchsfertigen und fertig montierten Solaranordnung zum Einsatz. Demgemäss ist es besonders vorteilhaft, dass die Solaranordnung auf einem Dach angeordnet ist. Die Unterkonstruktion, die auch als Befestigungsstruktur bezeichnet werden kann, bildet somit zweckmässigerweise einen Dachaufsatz, an dem die Solarmodule, vorzugsweise unter einen Winkel, befestigt werden. Weiterhin betrifft die Erfindung auch den Betrieb einer Solaranordnung, die erfindungsgemäss sowohl S-Modulpositionen als auch F-Modulpositionen aufweist, und insbesondere die Verwendung einer erfindungsgemässen Solaranordnung zum Umwandeln von Sonnenlicht in elektrische Energie, welche in ein Elektrizitätsversorgungsnetz eingespeist wird.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: Eine Draufsicht auf eine erste Ausführungsform einer erfindungsgemässen Solaranordnung;
- Figur 2:: Eine Draufsicht auf eine zweite Ausführungsform einer erfindungsgemässen Solaranordnung; und
- Figur 3:: Eine perspektivische Detailausschnittsansicht der Solaranordnung aus Figur 1 oder 2.

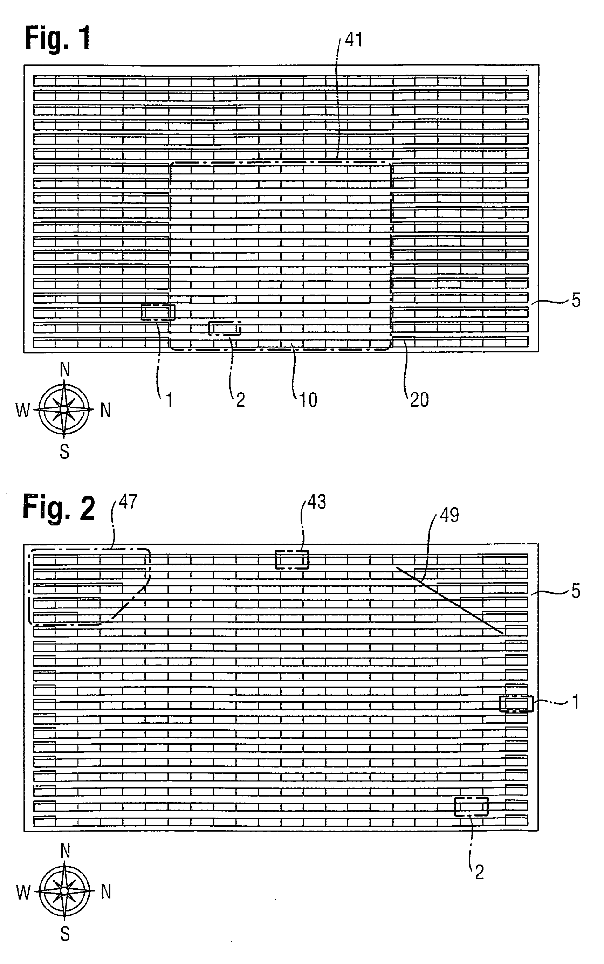

Eine erste Ausführungsform einer erfindungsgemässen Solaranordnung ist in Figur 1 dargestellt. We Figur 1 zeigt, weist die Solaranordnung eine Vielzahl von Modulpositionen 1 und 2 auf, an denen jeweils ein Solarmodul 10 angeordnet ist. Die Modulpositionen 1 und 2 sind in Form einer rechteckigen Matrix angeordnet, im Falle von Figur 1 beispielhaft mit 22 in Nord-Süd-Richtung (N-S) verlaufenden Spalten und 19 in West-Ost-Richtung (W-E) verlaufenden Reihen.

Wie Figur 1 weiter zeigt, ist an einem Teil der Modulpositionen, nämlich an den sogenannten S-Modulpositionen 1, den Solarmodulen 10, die sich in den Modulpositionen 1 befinden, jeweils ein Wndschott 20 zugeordnet.

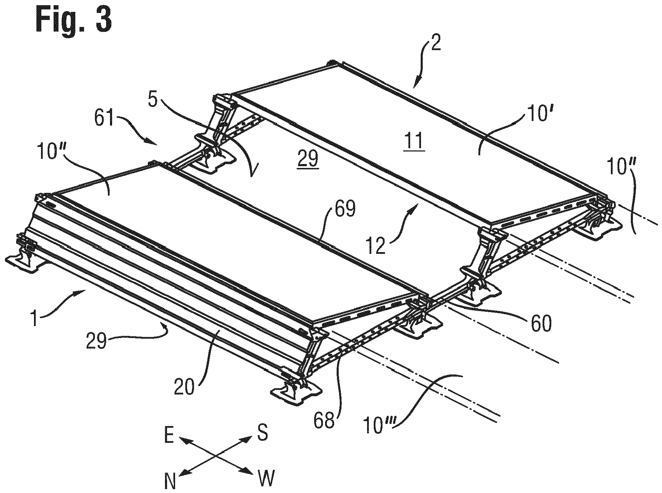

Details der Solaranordnung aus Figur 1 sind in Figur 3 dargestellt, die einen Ausschnitt aus der Anordnung aus Figur 1 zeigt. Wie Figur 3 zu entnehmen ist, weist die Solaranordnung eine Unterkonstruktion 61 mit einer Vielzahl von Füssen 60 auf, welche auf einem Dach 5 aufstehen und welche die Solarmodule 10 aufständern. Wie in Figur 3 am Beispiel des mit dem Bezugszeichen 60 versehenen Fusses gezeigt ist, trägt jeder Fuss jeweils 4 benachbarte Solarmodule 10, im Beispiel die Solarmodule 10', 10" sowie die mit Strichlinien lediglich angedeuteten Solarmodule 10"' und 10"". Bei den Füssen 60 handelt es sich um innere Füsse; am Rand der Solaranordnung können auch anders gestaltete Füsse vorgesehen sein, die jeweils nur zwei oder nur ein Solarmodul 10 tragen. Zum Festlegen der Solarmodule 10 an den Füssen 60 können beispielsweise Modulklemmen vorgesehen sein.

Die Solarmodule 10 weisen jeweils eine photoaktive Oberseite 11 sowie eine gegenüberliegende Unterseite 12 auf. Die Solarmodule 10 werden von der Unterkonstruktion 61 winklig zur Horizontalen und/oder der Oberfläche des Dachs 5 gehalten, wobei entsprechend der üblichen Konvention in der Solartechnik die Richtung, in welche die photoaktive Oberseite 11 der Solarmodule 10 hin verkippt ist, die Südrichtung (S) der Anordnung ist. Die verbleibenden Richtungen Nord (N), West (W) und Ost (E) ergeben sich entsprechend einer üblichen Kompassrose.

In Figur 3 ist beispielhaft eine F-Modulposition 2, nämlich am Solarmodul 10', und eine S-Modulposition 1, nämlich am Solarmodul 10", im Detail dargestellt. An der F-Modulposition 2 ist dem Solarmodul 10' kein Wndschott zugeordnet. Damit ist an der Nordseite des Solarmoduls 10' der F-Modulposition 2 eine Durchgangsöffnung 29 vorhanden, die zur Unterseite 12 des Solarmoduls 10' führt. Bei der S-Modulposition 1 ist dem Solarmodul 10" hingegen ein Wndschott 20 zugeordnet, welches an der Nordseite des Solarmodul 10" angeordnet ist und von dort winklig zur Horizontalen nach unten verläuft. Durch dieses Wndschott 20 ist die Durchgangsöffnung 29 der S-Modulposition 1 abgedeckt.

Wie Figur 3 weiter entnommen werden kann, sind die einzelnen Füsse 60 in Nord-SüdRichtung mit Streben 68 und in West-Ost-Richtung mit Streben 69 verbunden, so dass eine hohe Steifigkeit erzielt wird.

Beim Ausführungsbeispiel der Figur 1 sind sämtliche S-Modulpositionen 1 in einer U-Form angeordnet, welche zur Südseite hin offen ist. Die F-Modulpositionen 2 sind in einem einzigen, zusammenhängenden F-Bereich 41 angeordnet, der beim Ausführungsbeispiel der Figur 1 rechteckig ist. Beim Ausführungsbeispiel der Figur 1 reichen die S-Modulpositionen 1 vom westlichen Rand, vom nördlichen Rand und vom östlichen Rand der matrixförmigen Anordnung jeweils 6 Positionen weit in das Innere der Anordnung.

Ein weiteres Ausführungsbeispiel einer erfindungsgemässen Solaranordnung ist in Figur 2 dargestellt, wobei die Blickrichtung in Figur 2 wie in Figur 1 eine Draufsicht auf das Dach 5 ist, und wobei die Detailansicht der Figur 3 auch auf das Ausführungsbeispiel der Figur 2 bezogen werden kann.

Ähnlich wie beim Ausführungsbeispiel der Figur 1 sind auch beim Ausführungsbeispiel der Figur 2 sämtliche S-Modulpositionen 1 in einer U-Form angeordnet, welche zur Südseite hin offen ist, und die F-Modulpositionen 2 sind in einem einzigen, zusammenhängenden F-Bereich angeordnet, der hier der Übersichtlichkeit halber nicht mit einem Bezugszeichen versehen ist.

Beim Ausführungsbeispiel der Figur 2 sind sämtliche am westlichen Rand, am nördlichen Rand und am östlichen Rand angeordneten Randmodulpositionen 43 als S-Modulpositionen 1 ausgebildet. Im Gegensatz zum Ausführungsbeispiel der Figur 1 reichen die S-Modulpositionen 1 gemäss Figur 2 jedoch weniger weit nach innen.

Da die Ecken der Anordnung häufig besonderen Windlasten ausgesetzt sind, ist beim Ausführungsbeispiel der Figur 2 an der nordwestlichen Ecke und der nordöstlichen Ecke jeweils ein Eckenschutzbereich 47 vorgesehen, an dem die Flächendichte der S-Modulpositionen 1 mit Windschott 20 verglichen mit der Umgebung erhöht ist. An den Eckenschutzbereichen 47 bildet die Grenzlinie 49 zwischen den S-Modulpositionen 1 und den F-Modulpositionen 2 eine Fase, die winklig zu den Rändern der Anordnung verläuft, insbesondere unter einem Winkel von 45°. Die Grenzlinie 49 kann beispielsweise auch konvex oder konkav verlaufen.

## Patentansprüche

1. Selbsttragende Solaranordnung mit
einer Vielzahl von Solarmodulen (10) und
einer Unterkonstruktion (61), welche die Solarmodule (10) trägt und miteinander verbindet, wobei die Unterkonstruktion (61) eine Vielzahl von Modulpositionen (1, 2) definiert, an denen jeweils ein Solarmodul (10) angeordnet ist,
wobei in der Unterkonstruktion (61) als S-Modulpositionen (1) ausgebildete Modulpositionen vorgesehen sind, die jeweils ein Windschott (20) aufweisen, welches eine Durchgangsöffnung (29) zur Unterseite des an der jeweiligen S-Modulposition (1) angeordneten Solarmoduls (10) abdeckt,
**dadurch gekennzeichnet,**
**dass** in der Unterkonstruktion (61) zusätzlich zu den S-Modulpositionen (1) auch als F-Modulpositionen (2) ausgebildete Modulpositionen vorgesehen sind, bei denen jeweils zumindest ein Teil der Durchgangsöffnung (29), die bei einer S-Modulposition (1) vom Windschott (20) abgedeckt ist, frei ist.

2. Solaranordnung nach Anspruch 1,
**dadurch gekennzeichnet,**
**dass** die Unterkonstruktion (61) eine Vielzahl von Füssen (60) aufweist, die jeweils vier benachbarte Solarmodule (10) tragen und/oder miteinander verbinden, wobei die Füsse (60) Gussteile, insbesondere Aluminium-Druckgussteile sind.

3. Solaranordnung nach Anspruch 2,
**dadurch gekennzeichnet,**
**dass** in zumindest einem Teil der Unterkonstruktion (61) benachbarte Füsse (60) mit Streben (68, 69) verbunden sind

4. Solaranordnung nach einem der vorstehenden Ansprüche,
**dadurch gekennzeichnet,**
**dass** zumindest 25 Modulpositionen (1, 2) vorgesehen sind, und
**dass** mehr als 25% der Modulpositionen F-Modulpositionen (2) sind.

5. Solaranordnung nach einem der vorstehenden Ansprüche,
**dadurch gekennzeichnet,**
**dass** zumindest ein Teil der Modulpositionen bei Draufsicht auf die Solaranordnung in Form einer rechteckigen Matrix angeordnet ist.

6. Solaranordnung nach einem der vorstehenden Ansprüche,
**dadurch gekennzeichnet,**
**dass** bei Draufsicht auf die Solaranordnung genau ein zusammenhängender F-Bereich (41) aus F-Modulpositionen (2) gebildet ist, wobei der zusammenhängende F-Bereich (41) zumindest 80% aller F-Modulpositionen (2) der Solaranordnung enthält.

7. Solaranordnung nach einem der vorstehenden Ansprüche,
**dadurch gekennzeichnet,**
**dass** zumindest 50% der bei Draufsicht auf die Solaranordnung am Rand der Solaranordnung liegenden Randmodulpositionen (43) S-Modulpositionen (1) sind.

8. Solaranordnung nach einem der vorstehenden Ansprüche,
**dadurch gekennzeichnet,**
**dass** zumindest 80% der S-Modulpositionen (1) bei Draufsicht auf die Solaranordnung in einer U-Form angeordnet sind.

9. Solaranordnung nach Anspruch 5,
**dadurch gekennzeichnet,**
**dass** an zumindest einer Ecke der Matrix ein Eckenschutzbereich (47) gebildet ist, in dem die Flächendichte der S-Modulpositionen (1) gegenüber der Umgebung des Eckenschutzbereichs (47) erhöht ist.

10. Solaranordnung nach einem der vorstehenden Ansprüche,
**dadurch gekennzeichnet,**
**dass** sie auf einem Dach (5) angeordnet ist.

11. Verwendung einer Solaranordnung nach einem der vorstehenden Ansprüche zum Umwandeln von Sonnenlicht in elektrische Energie, welche in ein Elektrizitätsversorgungsnetz eingespeist wird.
